# FASCICULE DE BREVET EUROPEEN

(11) **EP 3 424 382 B1**
(45) Date de publication et mention de la délivrance du brevet: **21.10.2020**
(21) Numéro de dépôt: 18181880.8
(22) Date de dépôt: 05.07.2018
(51) Int. Cl.: A47J 43/07

(54) **APPAREIL DE PRÉPARATION CULINAIRE POUR LA RÉALISATION D'ÉMULSIONS**
EMULSION HAUSHALTSGERÄT ZUR ESSENSZUBEREITUNG
COOKING DEVICE FOR THE PREPARATION OF EMULSIFYING FOOD

(30) Priorité: 07.07.2017 FR 1756447
(43) Date de publication de la demande: 09.01.2019
(73) Titulaire: SEB S.A., 69130 Ecully (FR)
(72) Inventeur: CYPRES, Régis, 65100 LOURDES (FR); BERTRAND, Nicolas, 61350 SAINT-MARS-D'ÉGRENNE (FR); SAUNIERE, Damien, 53100 MAYENNE (FR)
(74) Mandataire: SEB Developpement Brevets

(56) Documents cités:
- EP-A1- 2 384 676
- EP-A2- 2 380 474
- FR-A- 814 239
- GB-A- 483 208
- US-A- 1 829 812

## Description

La présente invention concerne le domaine technique des appareils de préparation culinaire comportant un récipient de travail, un outil de travail rotatif agencé dans le récipient de travail, un boîtier moteur disposé au dessus du récipient de travail, et une coupelle agencée entre le récipient de travail et le boîtier moteur.

La présente invention concerne les appareils du type précité comportant un dispositif de sécurité interdisant le fonctionnement de l'appareil en l'absence de la coupelle. La coupelle permet de protéger la face inférieure du boîtier moteur des projections de la préparation réalisée dans le récipient de travail au moyen de l'outil de travail rotatif.

La présente invention concerne notamment, mais non exclusivement, les appareils du type précité dans lequel le dispositif de sécurité interdit également le fonctionnement de l'appareil en l'absence du récipient de travail. Le document EP2380474 divulgue un appareil comportant un tel dispositif de sécurité.

Un appareil selon le préambule de la revendication 1 est connu du document EP2380474 ou du document EP2384676.

Les documents FR 814 239 et US 1 829 812 divulguent des mélangeurs pour faire de la mayonnaise, qui comportent un réservoir présentant un fond déversant vers un orifice. Toutefois ces documents ne divulguent pas de boîtier motorisé comportant un dispositif de sécurité associé à un moteur électrique.

La présente invention concerne un dispositif d'écoulement d'huile en filet sur une base aqueuse disposée dans le récipient de travail de l'appareil, pour réaliser une émulsion de l'huile dans l'eau. La base aqueuse peut inclure notamment de l'œuf, de la moutarde, du vinaigre, du jus de citron, de l'eau ajoutée.

Il est connu un appareil du type précité comportant un réservoir d'huile disposé dans le bol en dessous de la coupelle, ce réservoir d'huile comportant deux orifices d'écoulement débouchant au dessus du récipient de travail. Un premier inconvénient de cet appareil réside dans la réduction de capacité utile du récipient de travail due à la mise en place du réservoir d'huile dans le récipient de travail. Un autre inconvénient de cet appareil réside dans la mise en place de la coupelle et du boîtier moteur après le versement de l'huile dans le réservoir d'huile, qui entraîne un temps assez long entre le début de l'écoulement de l'huile hors du réservoir d'huile et l'entraînement en rotation de l'outil de travail rotatif disposé dans le récipient de travail. Il en résulte que la réalisation d'émulsions d'huile dans l'eau, telles que la sauce mayonnaise ou la sauce béarnaise, n'est pas optimale, car les deux orifices font couler l'huile trop abondamment avant que l'outil de travail rotatif ne soit entraîné en rotation.

Un objet de la présente invention est de proposer un appareil du type précité, qui permette d'émulsionner des sauces de type émulsion d'huile dans l'eau, telles que la sauce mayonnaise ou la sauce béarnaise, avec une bonne qualité de résultat, tout en présentant une configuration compacte.

Un autre objet de la présente invention est de proposer un appareil du type précité, qui permette d'émulsionner des sauces de type émulsion d'huile dans l'eau, telles que la sauce mayonnaise ou la sauce béarnaise, avec une bonne qualité de résultat, tout en présentant une construction économique.

Un autre objet de la présente invention est de proposer un appareil du type précité, qui permette d'émulsionner des sauces de type émulsion d'huile dans l'eau, telles que la sauce mayonnaise ou la sauce béarnaise, avec une bonne qualité de résultat, qui soit simple à utiliser.

Ces objets sont atteints avec un appareil électroménager de préparation culinaire, comportant un boîtier supérieur logeant un moteur associé à un dispositif de sécurité, un récipient de travail dans lequel est disposé un outil de travail rotatif monté sur un moyeu entraîné en rotation par le moteur selon un axe de rotation, une coupelle disposée entre le boîtier supérieur et le récipient de travail, le dispositif de sécurité comportant un premier organe de détection interdisant le fonctionnement du moteur en l'absence de la coupelle, le premier organe de détection pouvant actionner un interrupteur de sécurité relié au circuit d'alimentation électrique du moteur, le premier organe de détection étant repoussé par la coupelle en place entre le boîtier supérieur et le récipient de travail pour autoriser le fonctionnement du moteur, du fait que la coupelle forme un réservoir d'huile présentant un fond déversant vers un orifice d'écoulement débouchant au-dessus du récipient de travail, et que la coupelle comporte une paroi annulaire séparant le réservoir d'huile en un réservoir externe et un réservoir interne, la paroi annulaire présentant au moins un passage inférieur traversant s'élevant à partir du fond. Cette disposition permet de faciliter le remplissage du réservoir d'huile, en utilisant le réservoir externe proche du bord de la coupelle, ce réservoir externe communiquant avec le réservoir interne. Un tel appareil est simple à utiliser, car après avoir versé l'huile dans la coupelle, l'utilisateur n'a plus qu'à mettre en place le boîtier supérieur sur la coupelle pour pouvoir entraîner en rotation l'outil de travail rotatif. Cette disposition permet de réduire le temps s'écoulant entre le début de l'écoulement de l'huile dans le récipient de travail et la mise en rotation de l'outil de travail rotatif. La quantité d'huile présente dans le récipient de travail au démarrage de la préparation peut ainsi être minimisée, ce qui contribue à améliorer la qualité des émulsions, l'huile étant incorporée progressivement à la préparation. Une telle réalisation s'avère ainsi particulièrement efficiente. De plus, une telle réalisation s'avère particulièrement économique, car par rapport à un appareil existant dépourvu de fonction particulière pour réaliser des émulsions, seule une modification de la coupelle est nécessaire.

Avantageusement, la coupelle comporte une paroi latérale périphérique délimitant le réservoir d'huile. Cette disposition permet d'optimiser la capacité du réservoir d'huile par rapport à l'encombrement de la coupelle.

Avantageusement encore, l'orifice d'écoulement est plus proche de l'axe de rotation que de la périphérie de la coupelle. Cette disposition permet d'incorporer l'huile s'écoulant du réservoir d'huile dans la partie centrale de la préparation présente dans le récipient de travail, ce qui favorise une diffusion progressive sous l'action de la rotation de l'outil de travail.

Avantageusement encore, la coupelle comporte une cheminée centrale prévue pour le passage du moyeu. Cette disposition permet de simplifier la conception de la coupelle, qui peut être dépourvue de partie mobile telle qu'un organe de transmission entre le moyeu et le moteur. Cette disposition permet également de faciliter le nettoyage de la coupelle.

Avantageusement alors, l'orifice d'écoulement est adjacent à la cheminée centrale. Cette disposition permet d'optimiser l'incorporation de l'huile.

Avantageusement encore, le réservoir d'huile est annulaire. Cette disposition permet de faciliter le remplissage du réservoir d'huile quelle que soit la position de la coupelle dans le récipient de travail.

Avantageusement encore, l'orifice d'écoulement est agencé dans le réservoir interne. Cette disposition permet d'améliorer l'incorporation de l'huile.

Avantageusement encore, le réservoir externe est annulaire. Cette disposition permet de faciliter le remplissage du réservoir d'huile quelle que soit la position de la coupelle dans le récipient de travail.

Avantageusement encore, le réservoir interne est annulaire. Cette disposition permet d'optimiser la capacité du réservoir d'huile.

Avantageusement encore, la paroi annulaire coopère avec le premier organe de détection. Cette disposition permet de placer la coupelle sur le récipient de travail sans indexation particulière.

Avantageusement encore, la coupelle est réalisée en une seule pièce. Cette disposition permet d'obtenir une construction plus économique.

Avantageusement encore, la coupelle est réalisée en matériau transparent et le récipient de travail est réalisé en matériau transparent. Cette disposition permet de faciliter le contrôle de l'avancement de la réalisation de la préparation.

Avantageusement encore, la coupelle repose de manière annulaire sur un rebord interne du récipient de travail. Cette disposition permet d'obtenir une étanchéité périphérique entre la coupelle et le récipient de travail, ce qui permet d'éviter des projections d'aliments lors de la préparation.

Avantageusement encore, le dispositif de sécurité comporte un deuxième organe de détection interdisant le fonctionnement du moteur en l'absence du récipient de travail, le deuxième organe de détection étant repoussé par le récipient de travail pour autoriser le fonctionnement du moteur. Cette disposition permet d'améliorer la sécurité de l'appareil.

Avantageusement encore, un autre outil de travail rotatif est monté sur le moyeu au dessus de l'outil de travail rotatif. Cette disposition permet de retarder la progression de l'huile vers le fond du récipient de travail. Cette disposition permet aussi d'améliorer le mélange de la préparation.

Selon une forme de réalisation, l'outil de travail rotatif comporte des lames.

Selon une autre forme de réalisation, l'outil de travail rotatif comporte un disque émulsionneur.

Dans un mode de réalisation non couvert par les revendications de la présente invention, un appareil électroménager de préparation culinaire peut comporter un boîtier supérieur logeant un moteur, un récipient de travail dans lequel est disposé un outil de travail rotatif monté sur un moyeu entraîné en rotation par le moteur selon un axe de rotation, une coupelle disposée entre le boîtier supérieur et le récipient de travail, dans lequel l'outil de travail rotatif consiste en un disque émulsionneur, cet appareil pouvant être dépourvu de dispositif de sécurité comportant un premier organe de détection interdisant le fonctionnement du moteur en l'absence de la coupelle.

L'invention sera mieux comprise à l'étude de deux exemples de réalisation et de variantes, pris à titre nullement limitatif, illustrés dans les figures annexées, dans lesquelles :
- la figure 1 est une vue en perspective et en éclaté d'un exemple de réalisation d'un appareil électroménager de préparation culinaire comportant une coupelle selon l'invention,
- la figure 2 est une vue en perspective de dessous du boîtier supérieur de l'appareil électroménager de préparation culinaire illustré sur la figure 1,
- la figure 3 est une vue en perspective de dessus de la coupelle et du moyeu en place dans le récipient de travail de l'appareil électroménager de préparation culinaire illustré sur la figure 1,
- la figure 4 est une vue en coupe et en élévation de l'appareil électroménager de préparation culinaire illustré sur la figure 1, en configuration assemblée,
- la figure 5 est une vue en perspective de dessus de la coupelle illustrée sur les figures 1 , 2 et 4,
- la figure 6 est une vue en perspective de côté de la coupelle illustrée sur les figures 1, 2, 4 et 5,
- la figure 7 est une vue en perspective de dessus d'une coupelle appartenant à un deuxième exemple de réalisation d'un appareil électroménager de préparation culinaire comportant une coupelle selon l'invention,
- la figure 8 est une vue en élévation et en coupe de la coupelle illustrée sur la figure 7, d'un récipient de travail et d'un outil de travail rotatif appartenant au deuxième exemple de réalisation d'un appareil électroménager de préparation culinaire comportant une coupelle selon l'invention,
- la figure 9 est une vue en élévation et en coupe de la coupelle et du récipient de travail illustrés sur la figure 8, et d'une variante de réalisation de l'outil de travail rotatif appartenant au deuxième exemple de réalisation d'un appareil électroménager de préparation culinaire comportant une coupelle selon l'invention,
- la figure 10 est une vue en élévation et en coupe de la coupelle et du récipient de travail illustrés sur les figures 8 et 9, et d'une autre variante de réalisation de l'outil de travail rotatif appartenant au deuxième exemple de réalisation d'un appareil électroménager de préparation culinaire comportant une coupelle selon l'invention.

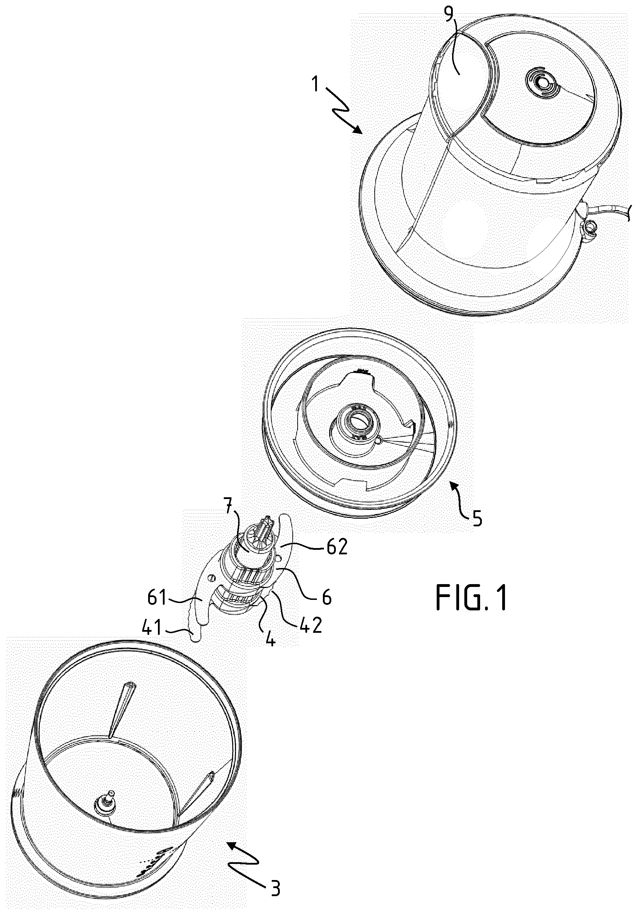

L'appareil électroménager de préparation culinaire illustré sur les figures 1 à 6 comporte un boîtier supérieur 1 logeant un moteur 2, un récipient de travail 3, un outil de travail rotatif 4 et un autre outil de travail rotatif 6 montés sur un

moyeu 7 disposé dans le récipient de travail 3, et une coupelle 5 disposée entre le boîtier supérieur 1 et le récipient de travail 3. Le moteur 2 est associé à un dispositif de commande 9 et à un dispositif de sécurité 20. Le dispositif de commande 9 et le dispositif de sécurité 20 sont reliés au circuit d'alimentation électrique du moteur 2. Le moyeu 7 est entraîné en rotation par le moteur 2 selon un axe de rotation 10. Le récipient de travail 3 est avantageusement réalisé en matériau transparent.

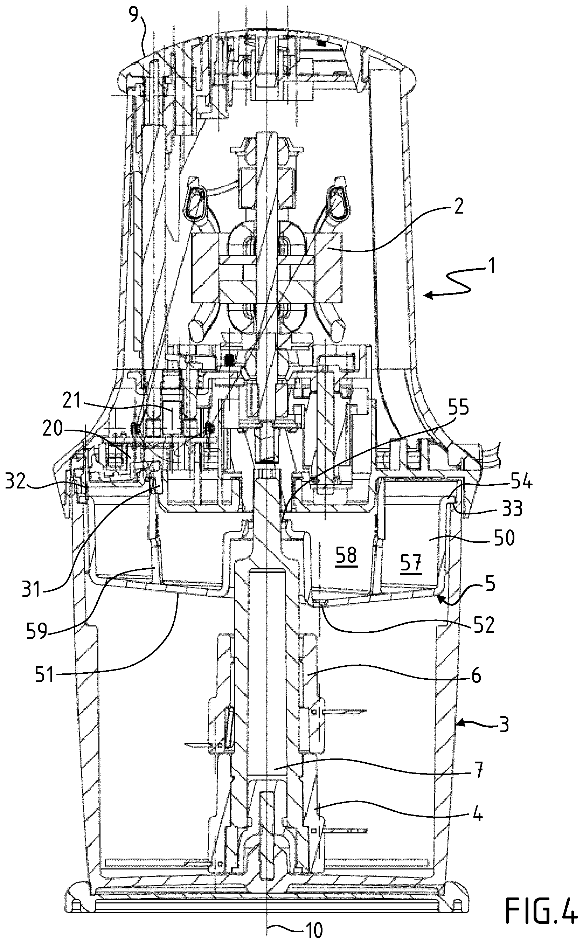

Tel que visible sur les figures 1 et 4, l'autre outil de travail rotatif 6 est monté sur le moyeu 7 au dessus de l'outil de travail rotatif 4. L'outil de travail rotatif 4 comporte des lames 41, 42. Les lames 41, 42 sont dentelées. L'autre outil de travail rotatif 6 comporte des lames 61, 62. L'outil de travail rotatif 4 et l'autre outil de travail rotatif 6 sont montés amovibles par rapport au moyeu 7. L'appareil peut fonctionner avec l'outil de travail rotatif 4 et l'autre outil de travail rotatif 6 montés superposés sur le moyeu 7, l'ordre de superposition étant indifférent, ou avec seulement l'outil de travail rotatif 4 ou l'autre outil de travail rotatif 6 monté sur le moyeu 7.

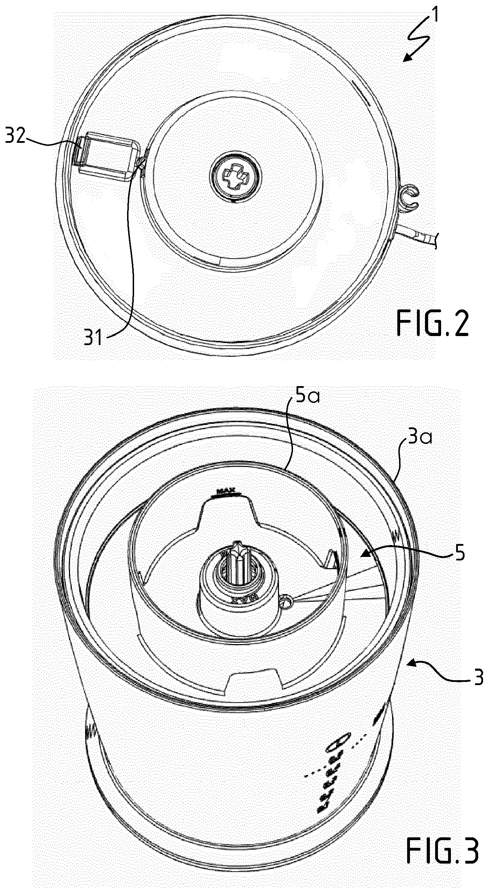

Tel que représenté sur les figures 2 à 4, le dispositif de sécurité 20 comporte un premier organe de détection 31 prévu pour venir en contact avec la coupelle 5, plus particulièrement avec une couronne 5a de la coupelle 5. Le premier organe de détection 31 est disposé dans une ouverture de la face inférieure du boîtier supérieur 1, tel que visible sur la figure 2. Le premier organe de détection 31 est mobile entre une première position en l'absence de la coupelle 5 et une deuxième position lorsque le boîtier supérieur 1 est en place sur la coupelle 5. Le premier organe de détection 31 interdit le fonctionnement du moteur 2 en l'absence de la coupelle 5. Le premier organe de détection 31 est repoussé par la coupelle 5 en place entre le boîtier supérieur 1 et le récipient de travail 3 pour autoriser le fonctionnement du moteur 2.

Le dispositif de sécurité 20 comporte un deuxième organe de détection 32 prévu pour venir en contact avec le récipient de travail 3, plus particulièrement avec un bord supérieur 3a du récipient de travail 3. Le deuxième organe de détection 32 est disposé dans une autre ouverture de la face inférieure du boîtier supérieur 1, tel que visible sur la figure 2. Le deuxième organe de détection 32 est mobile entre une première position en l'absence du récipient de travail 3 et une deuxième position lorsque le boîtier supérieur 1 est en place sur le récipient de travail 3. Le deuxième organe de détection 32 interdit le fonctionnement du moteur 2 en l'absence du récipient de travail 3. Le deuxième organe de détection 32 est repoussé par le récipient de travail 3 pour autoriser le fonctionnement du moteur 2.

Selon une forme de réalisation préférée illustrée sur les figures, le premier organe de détection 31 et le deuxième organe de détection 32 peuvent actionner un interrupteur de sécurité 21 commun relié au circuit d'alimentation électrique du moteur 2. En alternative, le premier organe de détection 31 et le deuxième organe de détection 32 peuvent actionner chacun un interrupteur de sécurité relié au circuit d'alimentation électrique du moteur 2.

Tel que mieux visible sur les figures 4 à 6, la coupelle 5 forme un réservoir d'huile 50 présentant un fond 51 déversant vers un orifice d'écoulement 52 débouchant au-dessus du récipient de travail 3. L'orifice d'écoulement 52 est agencé de préférence au point bas du fond 51 du réservoir d'huile 50. L'orifice d'écoulement 52 est de préférence circulaire. L'orifice d'écoulement 52 présente avantageusement un diamètre compris entre 3 et 5 mm. La coupelle 5 peut être réalisée en une seule pièce. La coupelle 5 est avantageusement réalisée en matériau transparent.

Dans l'exemple de réalisation illustré sur les figures 1 à 6, l'orifice d'écoulement 52 est plus proche de l'axe de rotation 10 que de la périphérie de la coupelle 5.

Dans l'exemple de réalisation illustré sur les figures 1 à 6, la coupelle 5 comporte une paroi latérale périphérique 53 délimitant le réservoir d'huile 50. La paroi latérale périphérique 53 comporte un rebord supérieur externe 54. Tel que visible sur la figure 4, la coupelle 5 repose de manière annulaire sur un rebord interne 33 du récipient de travail 3. Le rebord supérieur externe 54 vient en appui sur le rebord interne 33.

Dans l'exemple de réalisation illustré sur les figures 1 à 6, la coupelle 5 comporte une cheminée centrale 55 prévue pour le passage du moyeu 7. L'orifice d'écoulement 52 est adjacent à la cheminée centrale 55. Tel que bien visible sur les figures 1, 3, 4, 5 et 6, l'orifice d'écoulement 52 est distinct de la cheminée centrale 55.

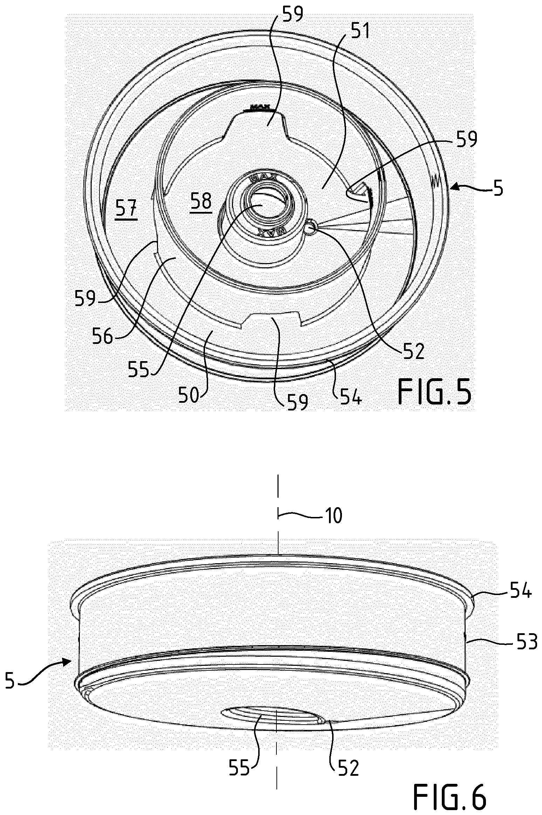

Dans l'exemple de réalisation illustré sur les figures 1 à 6, le réservoir d'huile 50 est annulaire. En effet selon la présente invention, la coupelle 5 comporte une paroi annulaire 56 séparant le réservoir d'huile 50 en un réservoir externe 57 et un réservoir interne 58, tel que visible sur la figure 5. Le réservoir externe 57 et le réservoir interne 58 sont annulaires. Le réservoir externe 57 entoure le réservoir interne 58. Le réservoir interne 58 entoure la cheminée centrale 55. La paroi annulaire 56 est issue du fond 51 du réservoir d'huile 50. La paroi annulaire 56 présente plusieurs passages inférieurs traversants 59 s'élevant à partir du fond 51 pour permettre la communication entre le réservoir externe 57 et le réservoir interne 58. L'orifice d'écoulement 52 est agencé dans le réservoir interne 58. Le réservoir externe 57 est déversant vers le réservoir interne 58. A titre de variante, la paroi annulaire 56 peut présenter au moins un passage inférieur traversant 59 s'élevant à partir du fond 51.

La paroi annulaire 56 coopère avec le premier organe de détection 31. Le sommet de la paroi annulaire 56 forme la couronne 5a venant en contact avec le premier organe de détection 31 lorsque le boîtier supérieur 1 est en place sur le récipient de travail 3 portant la coupelle 5.

L'appareil électroménager de préparation culinaire illustré sur les figures 1 à 6 s'utilise et fonctionne de la manière suivante.

Pour réaliser une préparation émulsionnée telle qu'une sauce mayonnaise, l'utilisateur monte l'outil de travail rotatif 4 et/ou l'autre outil de travail rotatif 6 sur le moyeu 7, et les met en place dans le récipient de travail 3. L'utilisateur dispose ensuite dans le récipient de travail 3 les ingrédients formant la base

aqueuse, tel que par exemple de l'œuf, de la moutarde, du vinaigre, du jus de citron, de l'eau ajoutée. L'utilisateur met ensuite en place la coupelle 5 dans le récipient de travail 3, puis verse la quantité d'huile appropriée pour la réalisation de la préparation dans le réservoir d'huile 50. L'utilisateur dispose ensuite le boîtier supérieur 1 sur le récipient de travail 3 portant la coupelle 5, et actionne le dispositif de commande 9. L'huile versée dans le réservoir d'huile 50 s'écoule graduellement dans le récipient de travail 3 en étant dispersée par l'outil de travail rotatif 4 et/ou l'autre outil de travail rotatif 6 monté(s) sur le moyeu 7 entraîné en rotation par le moteur 2. L'huile s'écoulant lentement sur les ingrédients présents dans le récipient de travail 3 permet de réaliser une émulsion de gouttelettes d'huile dans une matrice aqueuse, créant la consistance recherchée. L'appareil selon l'invention permet d'obtenir une bonne qualité de résultat sans nécessiter d'action continue de la part de l'utilisateur. L'utilisation de l'appareil est simple. Cet appareil présente une construction économique. Cet appareil présente de plus une configuration compacte puisque tous les éléments peuvent être logés dans le récipient de travail 3.

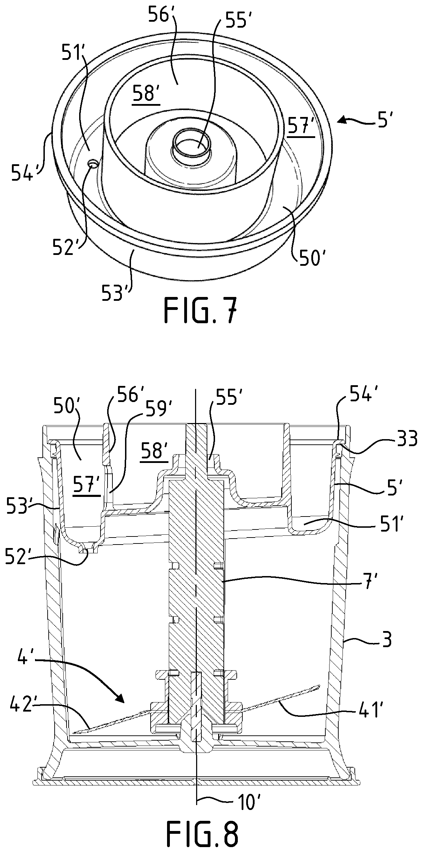

Un deuxième exemple de réalisation illustré sur les figures 7 et 8 utilise le même boîtier supérieur (non représenté) que le premier exemple de réalisation, ainsi que le même récipient de travail 3. Comme dans l'exemple de réalisation précédent, le rebord supérieur externe 54' de la coupelle 5' vient en appui sur le rebord interne 33 du récipient de travail 3. La coupelle 5' comporte également un réservoir d'huile 50' délimité par une paroi latérale périphérique 53'. Le réservoir d'huile 50' est séparé en un réservoir externe 57' et un réservoir interne 58' par une paroi annulaire 56'. Le réservoir d'huile 50', le réservoir externe 57' et le réservoir interne 58' sont annulaires.

Le deuxième exemple de réalisation illustré sur les figures 7 et 8 diffère du premier exemple de réalisation illustré sur les figures 1 à 6 en ce que l'orifice d'écoulement 52' est plus proche de la périphérie de la coupelle 5' que de la cheminée 55' et de l'axe de rotation 10'. Tel que bien visible sur les figures 7, 8, 9 et 10, l'orifice d'écoulement 52' est distinct de la cheminée centrale 55'.

La paroi annulaire 56' présente un passage inférieur traversant 59' s'élevant à partir du fond 51' pour permettre la communication entre le réservoir externe 57' et le réservoir interne 58'. L'orifice d'écoulement 52' est agencé dans le réservoir externe 57'. Le réservoir interne 58' est déversant vers le réservoir externe 57'.

Dans le deuxième exemple de réalisation illustré sur la figure 8, le moyeu 7' porte un outil de travail rotatif 4' comportant des lames 41', 42'.

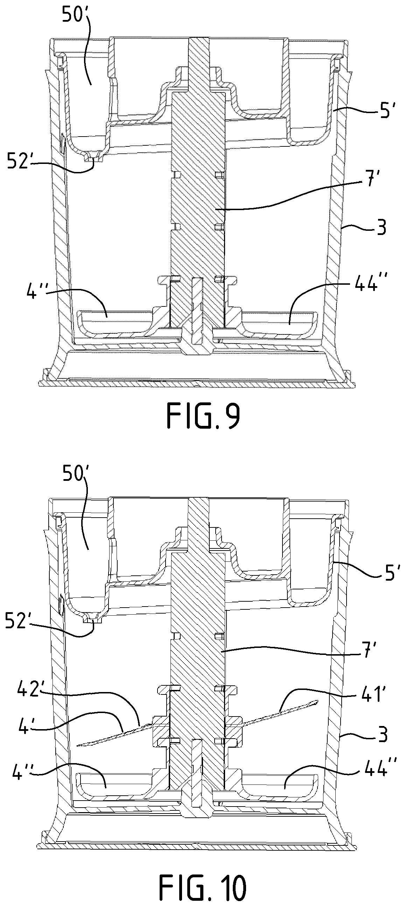

A titre de variante, le moyeu 7' peut notamment porter un outil de travail rotatif 4" comportant un disque émulsionneur 44", tel que représenté sur la figure 9. Le moyeu 7' peut également porter deux outils de travail rotatifs 4', 4" superposés, tel que représenté sur la figure 10.

Dans un mode de réalisation non couvert par les revendications de la présente invention, un appareil électroménager de préparation culinaire utilisant uniquement un ou plusieurs outils de travail rotatifs 4" comportant un disque émulsionneur 44" peut être dépourvu de dispositif de sécurité 20.

La présente invention n'est nullement limitée à l'exemple de réalisation décrit et à ses variantes, mais englobe de nombreuses modifications dans le cadre des revendications.

## Revendications

1. Appareil électroménager de préparation culinaire, comportant un boîtier supérieur (1) logeant un moteur (2) associé à un dispositif de sécurité (20), un récipient de travail (3) dans lequel est disposé un outil de travail rotatif (4 ; 4' ; 4") monté sur un moyeu (7 ; 7') entraîné en rotation par le moteur (2) selon un axe de rotation (10), une coupelle (5 ; 5') disposée entre le boîtier supérieur (1) et le récipient de travail (3), le dispositif de sécurité (20) comportant un premier organe de détection (31) interdisant le fonctionnement du moteur (2) en l'absence de la coupelle (5 ; 5'), le premier organe de détection (31) pouvant actionner un interrupteur de sécurité (21) relié au circuit d'alimentation électrique du moteur (2), le premier organe de détection (31) étant repoussé par la coupelle (5 ; 5') en place entre le boîtier supérieur (1) et le récipient de travail (3) pour autoriser le fonctionnement du moteur (2), **caractérisé en ce que** la coupelle (5 ; 5') forme un réservoir d'huile (50 ; 50') présentant un fond (51 ; 51') déversant vers un orifice d'écoulement (52 ; 52') débouchant au-dessus du récipient de travail (3) et **en ce que** la coupelle (5 ; 5') comporte une paroi annulaire (56 ; 56') séparant le réservoir d'huile (50 ; 50') en un réservoir externe (57 ; 57') et un réservoir interne (58 ; 58'), la paroi annulaire (56 ; 56') présentant au moins un passage inférieur traversant (59 ; 59') s'élevant à partir du fond (51 ; 51').

2. Appareil électroménager de préparation culinaire selon la revendication 1, **caractérisé en ce que** la coupelle (5 ; 5') comporte une paroi latérale périphérique (53 ; 53') délimitant le réservoir d'huile (50 ; 50').

3. Appareil électroménager de préparation culinaire selon l'une des revendications 1 ou 2, **caractérisé en ce que** l'orifice d'écoulement (52) est plus proche de l'axe de rotation (10) que de la périphérie de la coupelle (5).

4. Appareil électroménager de préparation culinaire selon l'une des revendications 1 à 3, **caractérisé en ce que** la coupelle (5 ; 5') comporte une cheminée centrale (55 ; 55') prévue pour le passage du moyeu (7 ; 7').

5. Appareil électroménager de préparation culinaire selon la revendication 4, **caractérisé en ce que** l'orifice d'écoulement (52) est adjacent à la cheminée centrale (55).

6. Appareil électroménager de préparation culinaire selon l'une des revendications 4 ou 5, **caractérisé en ce que** l'orifice d'écoulement (52 ; 52') est distinct de la cheminée centrale (55 ; 55').

7. Appareil électroménager de préparation culinaire selon l'une des revendications 1 à 6, **caractérisé en ce que** le réservoir d'huile (50 ; 50') est annulaire.

8. Appareil électroménager de préparation culinaire selon l'une des revendications 1 à 7, **caractérisé en ce que** l'orifice d'écoulement (52) est agencé dans le réservoir interne (58).

9. Appareil électroménager de préparation culinaire selon l'une des revendications 1 à 8, **caractérisé en ce que** le réservoir externe (57 ; 57') est annulaire.

10. Appareil électroménager de préparation culinaire selon l'une des revendications 1 à 9, **caractérisé en ce que** le réservoir interne (58 ; 58') est annulaire.

11. Appareil électroménager de préparation culinaire selon l'une des revendications 1 à 10, **caractérisé en ce que** la paroi annulaire (56 ; 56') coopère avec le premier organe de détection (31).

12. Appareil électroménager de préparation culinaire selon l'une des revendications 1 à 11, **caractérisé en ce que** la coupelle (5 ; 5') est réalisée en matériau transparent et **en ce que** le récipient de travail (3) est réalisé en matériau transparent.

13. Appareil électroménager de préparation culinaire selon l'une des revendications 1 à 12, **caractérisé en ce que** l'outil de travail rotatif (4 ; 4') comporte des lames (41, 42 ; 41', 42').

14. Appareil électroménager de préparation culinaire selon l'une des revendications 1 à 13, **caractérisé en ce que** l'outil de travail rotatif (4") comporte un disque émulsionneur (44").

## Patentansprüche

1. Elektrohaushaltsgerät zur Nahrungsmittelzubereitung, das ein oberes Gehäuse (1) umfasst, das einen Motor (2), der mit einer Sicherheitsvorrichtung (20) assoziiert ist, einen Arbeitsbehälter (3), in dem ein drehendes Arbeitswerkzeug (4; 4'; 4") angeordnet ist, das auf eine Nabe (7; 7') montiert ist, die in Drehung von dem Motor (2) entlang einer Drehachse (10) angetrieben ist, eine Schale (5; 5'), die zwischen dem oberen Gehäuse (1) und dem Arbeitsbehälter (3) angeordnet ist, aufnimmt, wobei die Sicherheitsvorrichtung (20) ein erstes Erfassungselement (31) umfasst, das den Betrieb des Motors (2) bei Abwesenheit der Schale (5; 5') untersagt, wobei das erste Erfassungselement (31) einen Sicherheitsschalter (21) betätigen kann, der mit der Stromversorgungsschaltung des Motors (2) verbunden ist, wobei das erste Erfassungselement (31) von der Schale (5; 5'), die zwischen dem oberen Gehäuse (1) und dem Arbeitsbehälter (3) an Ort und Stelle ist, zurückgeschoben wird, um das Funktionieren des Motors (2) zu gestatten, **dadurch gekennzeichnet, dass** die Schale (5; 5') einen Ölvorratsbehälter (50; 50') bildet, der einen Boden (51; 51') aufweist, der zu einer Abflussöffnung (52; 52') ablässt, die oberhalb des Arbeitsbehälters (3) mündet, und dass die Schale (5; 5') eine Ringwand (56; 56') umfasst, die den Ölvorratsbehälter (50; 50') in einen Außenvorratsbehälter (57; 57') und einen Innenvorratsbehälter (58; 58') trennt, wobei die Ringwand (56; 56') mindestens eine durchgehende untere Passage (59; 59') aufweist, die sich ausgehend von dem Boden (51; 51') erhebt.

2. Elektrohaushaltsgerät zur Nahrungsmittelzubereitung nach Anspruch 1, **dadurch gekennzeichnet, dass** die Schale (5; 5') eine umfängliche Seitenwand (53; 53'), die den Ölvorratsbehälter (50; 50') abgrenzt, umfasst.

3. Elektrohaushaltsgerät zur Nahrungsmittelzubereitung nach einem der Ansprüche 1 oder 2, **dadurch gekennzeichnet, dass** die Abflussöffnung (52) der Drehachse (10) näher ist als der Peripherie der Schale (5).

4. Elektrohaushaltsgerät zur Nahrungsmittelzubereitung nach einem der Ansprüche 1 bis 3, **dadurch gekennzeichnet, dass** die Schale (5; 5') einen zentralen Schacht (55; 55') umfasst, der für das Durchgehen der Nabe (7; 7') vorgesehen ist.

5. Elektrohaushaltsgerät zur Nahrungsmittelzubereitung nach Anspruch 4, **dadurch gekennzeichnet, dass** die Abflussöffnung (52) an den zentralen Schacht (55) angrenzt.

6. Elektrohaushaltsgerät zur Nahrungsmittelzubereitung nach einem der Ansprüche 4 oder 5, **dadurch gekennzeichnet, dass** die Abflussöffnung (52; 52') von dem zentralen Schacht (55; 55') separat ist.

7. Elektrohaushaltsgerät zur Nahrungsmittelzubereitung nach einem der Ansprüche 1 bis 6, **dadurch gekennzeichnet, dass** der Ölvorratsbehälter (50; 50') ringförmig ist.

8. Elektrohaushaltsgerät zur Nahrungsmittelzubereitung nach einem der Ansprüche 1 bis 7, **dadurch gekennzeichnet, dass** die Abflussöffnung (52) in dem Innenvorratsbehälter (58) eingerichtet ist.

9. Elektrohaushaltsgerät zur Nahrungsmittelzubereitung nach einem der Ansprüche 1 bis 8, **dadurch gekennzeichnet, dass** der Außenvorratsbehälter (57; 57') ringförmig ist.

10. Elektrohaushaltsgerät zur Nahrungsmittelzubereitung nach einem der Ansprüche 1 bis 9, **dadurch gekennzeichnet, dass** der Innenvorratsbehälter (58; 58') ringförmig ist.

11. Elektrohaushaltsgerät zur Nahrungsmittelzubereitung nach einem der Ansprüche 1 bis 10, **dadurch gekennzeichnet, dass** die Ringwand (56; 56') mit dem ersten Erfassungselement (31) zusammenwirkt.

12. Elektrohaushaltsgerät zur Nahrungsmittelzubereitung nach einem der Ansprüche 1 bis 11, **dadurch gekennzeichnet, dass** die Schale (5; 5') aus durchsichtigem Material hergestellt ist, und dass der Arbeitsbehälter (3) aus durchsichtigem Material hergestellt ist.

13. Elektrohaushaltsgerät zur Nahrungsmittelzubereitung nach einem der Ansprüche 1 bis 12, **dadurch gekennzeichnet, dass** das drehende Arbeitswerkzeug (4; 4') Klingen (41, 42; 41', 42') umfasst.

14. Elektrohaushaltsgerät zur Nahrungsmittelzubereitung nach einem der Ansprüche 1 bis 13, **dadurch gekennzeichnet, dass** das drehende Arbeitswerkzeug (4") eine Emulgierscheibe (44") umfasst.

## Claims

1. Electrical kitchen appliance, comprising an upper casing (1) housing a motor (2) associated with a safety device (20), a working container (3) wherein is arranged a rotating working tool (4; 4'; 4") mounted on an axle (7; 7') rotated by the motor (2) about an axis of rotation (10), a cup (5; 5') arranged between the upper casing (1) and the working container (3), the safety device (20) comprising a first detection member (31) prohibiting the operation of the motor (2) in the absence of the cup (5; 5'), the first detection member (31) which can actuate a safety switch (21) connected to the electrical power circuit of the motor (2), the first detection member (31) being pushed back by the cup (5; 5') in place between the upper casing (1) and the working container (3) to allow the operation of the motor (2), **characterised in that** the cup (5; 5') forms an oil tank (50; 50') having a bottom (51; 51') discharging towards a flow orifice (52; 52') opening out above the working container (3) and **in that** the cup (5; 5') comprises an annular wall (56; 56') separating the oil tank (50; 50') into an outer tank (57; 57') and an inner tank (58; 58'), the annular wall (56; 56') having at least one lower through passage (59; 59') raising from the bottom (51; 51').

2. Electrical kitchen appliance according to claim 1, **characterised in that** the cup (5; 5') comprises a peripheral side wall (53; 53') delimiting the oil tank (50; 50').

3. Electrical kitchen appliance according to one of claims 1 or 2, **characterised in that** the flow orifice (52) is closer to the axis of rotation (10) than the periphery of the cup (5).

4. Electrical kitchen appliance according to one of claims 1 to 3, **characterised in that** the cup (5; 5') comprises a central funnel (55; 55') provided for the passage of the axle (7; 7').

5. Electrical kitchen appliance according to claim 4, **characterised in that** the flow orifice (52) is adjacent to the central funnel (55).

6. Electrical kitchen appliance according to one of claims 4 or 5, **characterised in that** the flow orifice (52; 52') is separate from the central funnel (55; 55').

7. Electrical kitchen appliance according to one of claims 1 to 6, **characterised in that** the oil tank (50; 50') is annular.

8. Electrical kitchen appliance according to one of claims 1 to 7, **characterised in that** the flow orifice (52) is arranged in the inner tank (58).

9. Electrical kitchen appliance according to one of claims 1 to 8, **characterised in that** the outer tank (57; 57') is annular.

10. Electrical kitchen appliance according to one of claims 1 to 9, **characterised in that** the inner tank (58; 58') is annular.

11. Electrical kitchen appliance according to one of claims 1 to 10, **characterised in that** the annular wall (56; 56') engages with the first detection member (31).

12. Electrical kitchen appliance according to one of claims 1 to 11, **characterised in that** the cup (5; 5') is made of transparent material and **in that** the working container (3) is made of transparent material.

13. Electrical kitchen appliance according to one of claims 1 to 12, **characterised in that** the rotating working tool (4; 4') comprises blades (41, 42; 41', 42').

14. Electrical kitchen appliance according to one of claims 1 to 13, **characterised in that** the rotating working tool (4") comprises a food-emulsifying disk (44").
